(19) **Europäisches Patentamt European Patent Office Office européen des brevets**

(11) **EP 4 773 461 A1**

(12) **EUROPEAN PATENT APPLICATION**
published in accordance with Art. 153(4) EPC

(43) Date of publication:
08.07.2026 Bulletin 2026/28

(21) Application number: 24881190.3

(22) Date of filing: 12.08.2024

(51) International Patent Classification (IPC):
*H02J 7/00* (2026.01)

(52) Cooperative Patent Classification (CPC):
H01M 10/44; H01M 10/48; H02J 7/00; Y02E 60/10

(86) International application number:
PCT/CN2024/111541

(87) International publication number:
WO 2025/086821 (01.05.2025 Gazette 2025/18)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 27.10.2023 CN 202311411511

(71) Applicant: Contemporary Amperex Technology
Co., Limited
Ningde, Fujian 352100 (CN)

(72) Inventors:
• WU, Kai
  Ningde, Fujian 352100 (CN)
• WANG, Haiyan
  Ningde, Fujian 352100 (CN)
• WU, Guisen
  Ningde, Fujian 352100 (CN)
• LI, Wei
  Ningde, Fujian 352100 (CN)

(74) Representative: Gong, Jinping
CocreateIP
Neumarkter Straße 21
81673 München (DE)

(54) **CHARGING METHOD AND APPARATUS, CHARGING MANAGEMENT DEVICE, AND COMPUTER READABLE STORAGE MEDIUM**

(57) The present application is applicable to the technical field of charging, and provides a charging method and apparatus, a charging management device, and a computer-readable storage medium. The method includes: acquiring a temperature of a battery to be charged; acquiring activation energy data of the battery to be charged; determining a charge cut-off voltage according to the temperature and the activation energy data; and charging the battery to be charged and controlling a maximum charging voltage of the battery to be charged to be less than or equal to the charge cut-off voltage. By using the method, an accuracy of the determined charge cut-off voltage can be improved, thereby enhancing the battery endurance and improving the user experience.

```
        ┌─────────────────┐ S11      ┌─────────────────┐ S12
        │ Acquire a       │          │ Acquire         │
        │ temperature of a│          │ activation      │
        │ battery to be   │          │ energy data of  │
        │ charged         │          │ the battery to  │
        │                 │          │ be charged      │
        └────────┬────────┘          └────────┬────────┘
                 │                            │
                 └──────────┬─────────────────┘
                            ▼
   ┌──────────────────────────────────────────────────┐
   │ Determine a charge cut-off voltage of the above   │  S13
   │ battery to be charged according to the above      │
   │ temperature and the above activation energy data  │
   └─────────────────────────┬────────────────────────┘
                             ▼
   ┌──────────────────────────────────────────────────┐
   │ Charge the battery to be charged and control a    │  S14
   │ maximum charging voltage of the battery to be     │
   │ charged to be less than or equal to the above     │
   │ charge cut-off voltage                            │
   └──────────────────────────────────────────────────┘
```

FIG. 1

EP 4 773 461 A1

## Description

The present application claims priority to Chinese Patent Application No. 202311411511.8, entitled "CHARGING METHOD AND APPARATUS, CHARGING MANAGEMENT DEVICE, AND COMPUTER-READABLE STORAGE MEDIUM" filed with the China National Intellectual Property Administration on October 27, 2023, which is incorporated herein by reference in its entirety.

## TECHNICAL FIELD

The present application relates to the technical field of charging, in particular to a charging method and apparatus, a charging management device, and a computer-readable storage medium.

## BACKGROUND

With the development of society, new energy devices are becoming increasingly diverse. During the service of a new energy device, a power battery of this new energy device needs to be charged, and during charging, it is usually necessary to refer to the charge cut-off voltage of the power battery to reduce damage to the performance of the power battery.

In an existing method, the charge cut-off voltage is set as a function of temperature. That is, the set charge cut-off voltage generally varies depending on temperature. However, after the battery is charged at the charge cut-off voltage determined in the above manner, the performance of the battery still hardly meets user requirements.

## Technical Problem

One of the objectives of embodiments of the present application is to provide a charging method and apparatus, a charging management device, and a computer-readable storage medium, so as to resolve the problem that an accuracy of a charge cut-off voltage determined in an existing method is relatively low, resulting in relatively poor user experience during charging based on the charge cut-off voltage.

## Technical Solution

A technical solution used in the embodiments of the present application is as follows:

In a first aspect, a charging method is provided, including:

> acquiring a temperature of a battery to be charged;
> acquiring activation energy data of the battery to be charged;
> determining a charge cut-off voltage according to the temperature and the activation energy data; and
> charging the battery to be charged and controlling a maximum charging voltage of the battery to be charged to be less than or equal to the charge cut-off voltage.

In an embodiment, the step of acquiring the activation energy data of the battery to be charged includes:

> determining a battery system in which the battery to be charged is located; and
> determining the activation energy data of the battery to be charged according to the battery system.

In an embodiment, the step of determining the charge cut-off voltage according to the temperature and the activation energy data includes:

> determining a plateau voltage according to the temperature and the activation energy data; and
> determining the charge cut-off voltage of the battery to be charged according to the plateau voltage.

In an embodiment, the step of determining the charge cut-off voltage of the battery to be charged according to the plateau voltage includes:
determining the charge cut-off voltage of the battery to be charged according to the plateau voltage and a preset voltage value. The charge cut-off voltage is greater than the plateau voltage.

In an embodiment, the step of determining the charge cut-off voltage of the battery to be charged according to the plateau voltage and the preset voltage value includes:
calculating a sum of the plateau voltage and the preset voltage value and using the calculated sum as the charge cut-off voltage of the battery to be charged.

In an embodiment, the preset voltage value is greater than or equal to 0.01 mV and less than or equal to 1000 mV.

In an embodiment, the preset voltage value is determined according to a target mapping, and the target mapping is a mapping between a gram capacity of an active material of the battery to be charged and a voltage value after the voltage value exceeds the plateau voltage.

In an embodiment, in the target mapping, a target ratio is greater than or equal to 0.3 and less than or equal to 0.7. The target ratio is a ratio between a maximum voltage value exceeding the plateau voltage and a gram capacity exceeding a target gram capacity. The target gram capacity is a gram capacity corresponding to the plateau voltage.

In a second aspect, a charging apparatus is provided, including:

> a temperature acquisition module for acquiring a temperature of a battery to be charged;
> an activation energy data acquisition module for acquiring activation energy data of the battery to be charged;

a charge cut-off voltage determination module for determining a charge cut-off voltage according to the temperature and the activation energy data; and

a charging module for charging the battery to be charged and controlling a maximum charging voltage of the battery to be charged to be less than or equal to the charge cut-off voltage.

In a third aspect, a charging management device is provided, including a memory, a processor, and a computer program stored in the memory and executable on the processor. When executing the computer program, the processor implements the method according to the first aspect.

In a fourth aspect, a computer-readable storage medium is provided. A computer program is stored in the computer-readable storage medium, and the computer program, when executed by a processor, implements the method according to the first aspect.

In a fifth aspect, an embodiment of the present application provides a computer program product. When the computer program product runs on a charging management device, the charging management device executes any one of the above methods according to the first aspect.

**Beneficial Effects**

The charging method provided in the embodiment of the present application has the following beneficial effects: since a temperature and activation energy data of a battery to be charged both affect whether an activity of an active material of the battery to be charged is fully exerted and whether the activity of the active material is fully exerted will affect the gram capacity of the active material, a more accurate charge cut-off voltage can be determined according to the temperature and activation energy data of the battery to be charged, so that after the battery to be charged is charged according to the charge cut-off voltage, the gram capacity of the active material of the charged battery is utilized to a greater extent, that is, the energy density of the charged battery is higher, thereby enhancing the battery endurance and improving the user experience.

**BRIEF DESCRIPTION OF THE DRAWINGS**

To describe the technical solution of embodiments of the present application more clearly, the following briefly introduces the accompanying drawings required for describing the embodiments or exemplary technologies. Apparently, the accompanying drawings in the following description shows merely some embodiments of the present application, and a person of ordinary skill in the art may alternatively derive other accompanying drawings from these accompanying drawings without creative efforts.

FIG. 1 is a schematic view of a charging method provided in an embodiment of the present application.

FIG. 2 is a schematic view of a voltage plateau provided in an embodiment of the present application;

FIG. 3 is a schematic view of curve segments respectively corresponding to a voltage plateau and a voltage value greater than the plateau voltage, as provided in an embodiment of the present application;

FIG. 4 is a schematic view of curve segments respectively corresponding to another voltage plateau and a voltage value greater than the plateau voltage, as provided in an embodiment of the present application;

FIG. 5 is a schematic view of a structure of a charging apparatus provided in another embodiment of the present application; and

FIG. 6 is a schematic view of a structure of a charging management device provided in an embodiment of the present application.

**DETAILED DESCRIPTION**

In the following description, for description rather than limitation, specific details such as specific system structures and techniques are provided, so as to facilitate thorough understanding of the embodiments of the present application. However, it should be clear to those skilled in the art that the present application can also be implemented in other embodiments without these specific details. In other cases, detailed description of well-known systems, apparatuses, circuits, and methods are omitted, so as to avoid unnecessary details that obscure the description of the present application.

It should be understood that when used in the specification and the appended claims of the present application, the term "include" indicates the presence of the described features, integers, steps, operations, elements, and/or assemblies, but does not exclude the presence or addition of one or more other features, integers, steps, operations, elements, assemblies, and/or sets thereof.

It should also be understood that the term "and/or" as used in the specification and the appended claims of the present application refers to one of or any combination of some of the associated listed items and all possible combinations thereof, and includes these combinations.

Reference to "one embodiment", "some embodiments", etc. described in the specification of the present application means that one or more embodiments of the present application include particular features, structures, or characteristics described with reference to the embodiments. Therefore, the statements "in one embodiment", "in some embodiments", "in some other embodiments", "in some further embodiments", etc. that appear in various places in this specification do not necessarily refer to a same embodiment, but mean "one or more but not all embodiments", unless otherwise specifically emphasized.

With the development of society, the application of power batteries is becoming increasingly widespread Power batteries are not only used in energy storage power systems such as water power plants, fire power plants, wind power plants and solar power plants, but also in electric transportations such as electric bicycles, electric motorcycles, and electric vehicles, as well as in military equipment, aerospace and other fields. With the continuous expansion of the application fields of power batteries, the market demand for power batteries is also expanding.

The power battery (hereinafter referred to as battery for short) can be charged many times during use and thus achieve rechargeability. Specifically, a battery stores and releases electric energy by means of a chemical reaction between active materials (such as lithium iron phosphate or lithium cobalt oxide or lithium manganese oxide or lithium nickelate) of a positive electrode and a negative electrode of the battery. After the battery is charged, the greater the gram capacity of the active material of the battery, the greater the energy density of the battery, that is, the stronger the endurance of the battery.

Whether an activity (or gram capacity) of an active material of a battery can be fully exerted is related to a charging voltage. Usually, when the charging voltage is less than a particular value, a same active material can release more electric capacity (that is, the activity of the active material is better exerted) at a higher charging voltage. After the charging voltage is greater than the value, the gram capacity of the active material is also exerted to a limited extent even if the charging voltage continues to increase. Given that a better gram capacity of an active material of a battery (that is, a greater electric capacity released by the active material) indicates a stronger endurance of the battery and also given that a higher charging voltage indicates more significant side effects on the battery (for example, causing an excessively high temperature of the battery), thereby affecting a stability of the battery, a charge cut-off voltage is usually set during charging, and a maximum charging voltage is defined as not exceeding the charge cut-off voltage. That is, whether the charge cut-off voltage is set to an accurate value may affect the battery endurance after charging and the user experience.

The setting of the charge cut-off voltage is to ensure the stability of the battery and enhance the exertion of the activity of the active material of the battery during charging; in addition, whether the activity of the active material of the battery can be fully exerted is not only related to the temperature but also to the activation energy data of the active material, and the activation energy data is not related to the temperature, that is, activation energy data corresponding to a same active material is the same at different temperatures. Therefore, if the charge cut-off voltage is set only according to the temperature, the accuracy of the resulting charge cut-off voltage is usually relatively low.

To improve the accuracy of the determined charge cut-off voltage and improve the stability and endurance of the battery, an embodiment of the present application provides a charging method. In the charging method, a charge cut-off voltage of a battery to be charged is first determined according to the temperature and activation energy data (that is, a value corresponding to activation energy) of the battery to be charged, and then, the battery to be charged is charged. A maximum charging voltage of the battery to be charged is controlled to be less than or equal to the charge cut-off voltage.

The following describes the charging method provided in the embodiments of the present application with reference to the accompanying drawings.

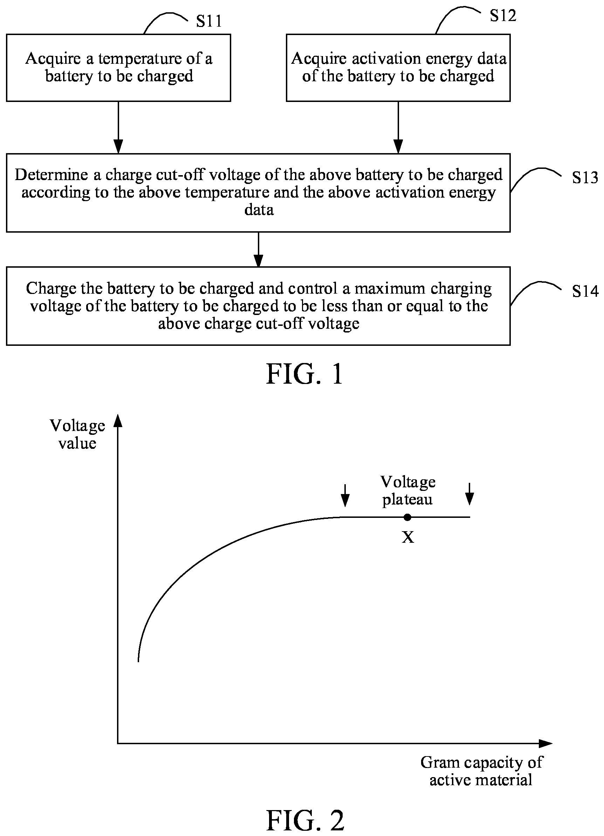

FIG. 1 shows a schematic view of a charging method provided in an embodiment of the present application, specifically as follows:

S11. A temperature of a battery to be charged is acquired.

The battery to be charged refers to a battery ready for charging. For example, when a new energy vehicle receives an instruction for charging battery A, the battery A is the battery to be charged in the embodiment of the present application. Specifically, the temperature of the battery to be charged can be acquired by detecting the battery to be charged by using a temperature sensor.

In some embodiments, when the number of the battery cells in the battery to be charged is equal to 1, the temperature of the battery to be charged can be set to a temperature of the battery cell. When the number of the battery cells in the battery to be charged is greater than 1, the temperature of the battery to be charged can be set as an average value of the temperatures of all the battery cells, so as to reflect an overall trend of the temperature of all the battery cells. Certainly, to reduce a cost of acquiring the temperature, the temperature of the battery to be charged can be set as an average value of the temperatures of some of the battery cells, or the temperature of the battery to be charged can be set as a temperature of a particular battery cell in the battery to be charged, that is, the temperature of the particular cell is used as the temperature of the battery to be charged. This is not limited herein.

S12. Activation energy data of the battery to be charged is acquired.

Activation energy refers to energy required for the transformation of molecules of an active material from a normal state to an active state in which a chemical reaction easily occurs, and the activation energy data is a value corresponding to the activation energy. For a same active material of the battery to be charged, corresponding activation energy data of the active material is the same at different temperatures.

In an embodiment of the present application, the activation energy data of the battery to be charged can be prerecorded, or data that is mapped to the activation energy data is prerecorded. When the activation energy data needs to be acquired, the corresponding activation energy data is then extracted from the record, or after the data that is mapped to the activation energy data is extracted from the record, the activation energy data is calculated according to the data and the mapping. Certainly, the activation energy data of the battery to be charged can alternatively be determined according to the active material itself of the battery to be charged when the activation energy data needs to be acquired. This is not limited herein.

Optionally, the activation energy data can be calculated by acquiring charging curves of the battery to be charged at different temperatures by means of testing; determining plateau voltages of the battery to be charged at at least two temperatures according to the charging curves; and then calculating the activation energy data of the battery to be charged according to the at least two plateau voltages and the corresponding temperatures. For example, it is assumed that the activation energy data is calculated with reference to the Arrhenius equation:

It is assumed that the Arrhenius equation in an exponential form is $k = Ae^{Ea/RT}$, where k is a chemical reaction rate constant of the active material, A is a pre-exponential factor (also referred to as a frequency factor), both k and A are related to the plateau voltage (for example, A is related to a plateau voltage at room temperature, and k is related to a plateau voltage at another temperature), R is a molar gas constant, T is a thermodynamic temperature, and Ea is an apparent activation energy (i.e., the activation energy data of the active material). Since at least two plateau voltages have been predetermined, k and A can be determined according to a predetermined relationship between the plateau voltage, k, and A. According to the above Arrhenius equation, after k, A, R, and T are all determined, the activation energy data of the active material can be calculated. After the activation energy data of the active material is calculated, the activation energy data can be recorded in a charging system, and when the battery to be charged needs to be charged, the recorded activation energy data is then acquired from the charging system.

In an embodiment of the present application, the plateau voltage refers to a voltage value on the voltage plateau, and the voltage plateau is a curve segment part having a relatively stable charging voltage in the charging curve of the battery to be charged. That is, in the voltage plateau, the gram capacity of the active material of the battery to be charged is exerted to a relatively great extent while the change in the voltage value is relatively small. The plateau voltage belonging to the voltage value of the voltage plateau generally refers to a voltage value that shows a minimum voltage change and a relatively great change in the gram capacity of the active material of the battery to be tested. The gram capacity of the active material refers to a ratio of an electric capacity that can be released by the active material to a mass of the active material. That is, the gram capacity and the activation energy data are parameters that describe characteristics of the active material from two different dimensions. It needs to be noted that when the active material exerts a relatively great activity, a value corresponding to a gram capacity that the active material can exert is a maximum value or close to the maximum value.

As shown in FIG. 2, there is a flat curve segment (similar to a plateau) on the curve corresponding to the voltage value versus the gram capacity of the active material. The plateau is namely the voltage plateau described in the embodiment of the present application. A voltage value corresponding to point X in the voltage plateau can be used as the plateau voltage described in the embodiment of the present application. Optionally, a median of voltage values within the voltage plateau can be used as the plateau voltage, or a minimum voltage value of the voltage plateau can be used as the plateau voltage. This is not limited herein. It needs to be noted that in FIG. 2, a line segment corresponding to the voltage plateau is a straight line segment, that is, corresponding voltage values in the voltage plateau are all equal. However, in an actual case, the line segment corresponding to the voltage plateau may only be a relatively flat curve segment, that is, corresponding voltage values in the voltage plateau are not completely equal.

S13. The charge cut-off voltage of the above battery to be charged is determined according to the above temperature and the above activation energy data.

The charge cut-off voltage is also referred to as a charge termination voltage, which means a voltage (or referred to as a voltage value) when the battery reaches a fully charged state during a specified charging period. Overcharging occurs if the charging still continues after the charge cut-off voltage is reached. Overcharging generally causes damage to the performance and life of the battery.

In an embodiment of the present application, given that whether the activity of the active material of the battery to be charged can be fully exerted is related to the temperature and the activation energy data of the active material, an accuracy of the determined charge cut-off voltage can be improved when the charge cut-off voltage is determined according to the temperature and the activation energy data.

In some embodiments, a charge cut-off voltage mapping table can be preset, and charge cut-off voltages corresponding to different temperatures and activation energy data are recorded in the charge cut-off voltage mapping table. After the temperature and activation energy data of the battery to be charged are acquired, the corresponding charge cut-off voltage can be found from the charge cut-off voltage mapping table.

S14. The battery to be charged is charged and a maximum charging voltage of the battery to be charged is controlled to be less than or equal to the above charge cut-off voltage.

Specifically, according to actual requirements, a corresponding charging method can be selected for charging the battery to be charged. For example, charging is performed by means of constant current charging, constant voltage charging, etc. After a maximum voltage of the battery to be charged reaches the charge cut-off voltage of the battery to be charged, the charging of the battery to be charged is usually stopped, so as to reduce damage to the performance of the battery.

In an embodiment of the present application, since a temperature and activation energy data of a battery to be charged both affect whether an activity of an active material of the battery to be charged is fully exerted and whether the activity of the active material is fully exerted will affect the gram capacity of the active material, a more accurate charge cut-off voltage can be determined according to the temperature and activation energy data of the battery to be charged, so that after the battery to be charged is charged according to the charge cut-off voltage, the gram capacity of the active material of the charged battery is utilized to a greater extent, that is, the energy density of the charged battery is higher, thereby enhancing the battery endurance and improving the user experience.

It should be understood that the size of the sequence number of each of the steps in the above embodiments does not mean an execution sequence. The execution sequence of the processes should be determined according to functions and internal logic thereof and should not be construed as being any limitation to the implementation process of the embodiments of the present application.

In some embodiments, to reduce the frequency of acquiring the temperature by the temperature sensor, the temperature of the battery to be charged can be acquired in S11 by

controlling the temperature sensor to acquire the temperature of the battery to be charged after receiving an instruction for charging the battery to be charged. Since the temperature of the battery to be charged is acquired after the instruction for charging the battery to be charged is received, the frequency of acquiring the temperature is reduced, thereby helping improve the service life of the temperature sensor. In addition, when the temperature is acquired in the above manner, it can be ensured that a latest temperature is acquired, that is, an accuracy of the acquired temperature is ensured.

In some embodiments, to acquire more accurate activation energy data, the above S12 includes:

A1: determining a battery system in which the above battery to be charged is located; and
A2: determining the activation energy data of the above battery to be charged according to the above battery system.

Specifically, given that different active materials are used in batteries of different battery systems (for example, different active materials are used in positive electrodes and/or negative electrodes of batteries in different battery systems), or different combinations of active materials are used in batteries of different battery systems and the activation energy corresponding to different active materials is usually different (in this case, the activation energy data of one of the active materials is usually selected as the activation energy data corresponding to the battery system), the battery system in which the battery to be charged is located can first be determined, and then, the activation energy data corresponding to the battery system in which the battery to be charged is located can be determined according to the mapping between the battery system and the activation energy data. Alternatively, after the battery system in which the battery to be charged is located is determined, the active material corresponding to the battery system in which the battery to be charged is located is determined according to the mapping between the battery system and the active material, and then, the activation energy data corresponding to the active material is determined according to the mapping between the active material and the activation energy. That is, since there is a particular mapping between the battery system and the active material and there is also a particular mapping between the active material and the activation energy data, the activation energy data of the battery to be charged is determined in the above manner, so that the accuracy of the determined activation energy data can be improved.

In some embodiments, to further improve the accuracy of the determined charge cut-off voltage, the above S13 includes:

B1. determining a plateau voltage according to the above temperature and the above activation energy data.

The plateau voltage refers to a corresponding voltage value when a change of the voltage value is minimum while a change of the gram capacity is relatively great. For example, the corresponding voltage value when the change of the voltage value is less than a first preset threshold while the change of the gram capacity exerted by the active material is greater than a second preset threshold is used as the plateau voltage in the embodiment of the present application. The first preset threshold is usually less than the second preset threshold, and the first preset threshold is close to 0.

In an embodiment of the present application, given that a mapping between the plateau voltage affecting the full exertion of the activity of the active material, the temperature, and the activation energy data conforms to the Arrhenius equation, the plateau voltage corresponding to the full exertion of the activity of the active material of the battery to be charged at the current temperature can be calculated according to the acquired temperature of the battery to be charged and the activation energy data of the battery to be charged.

Specifically, it is assumed that the Arrhenius equation in an exponential form is $k = Ae^{Ea/RT}$, where A is related to a plateau voltage at room temperature (such as 25°C), and k is related to a plateau voltage at another temperature. A can be predetermined. For example, after a plateau voltage at room temperature is determined according to the charging curve, A is determined according to a relationship between the plateau voltage and A. Therefore, k can be determined according to R, T, Ea, and A that have been determined, that is, k related to a plateau voltage of a current temperature is determined, and then with reference to the predetermined mapping between k and the plateau voltage, the plateau voltage corresponding to the current temperature can be determined.

In some embodiments, a plateau voltage mapping relationship can also be predetermined. The plateau voltage mapping relationship is used to record a mapping between the temperature, the activation energy data, and the plateau voltage. After the temperature and activation energy data of the battery to be charged are acquired, the corresponding plateau voltage is determined according to the plateau voltage mapping relationship. Certainly, the plateau voltage can also be determined in another manner, and details are not described herein again.

B2. The charge cut-off voltage of the above battery to be charged according to the above plateau voltage is determined.

Specifically, the corresponding charge cut-off voltage is determined with reference to the plateau voltage. For example, the plateau voltage is used as the charge cut-off voltage, or a voltage value greater than the plateau voltage is used as the charge cut-off voltage.

Since the activity of the active material of the battery to be charged can be fully exerted at the plateau voltage, and when the activity of the active material is fully exerted, the energy density of the battery can be improved, that is, the endurance of the battery to be charged can be improved, the accuracy of the determined charge cut-off voltage can be improved in the embodiment of the present application when the charge cut-off voltage is determined with reference to the plateau voltage.

In some embodiments, the above B2 includes: determining the charge cut-off voltage of the above battery to be charged according to the above plateau voltage and a preset voltage value. The above charge cut-off voltage is greater than the plateau voltage.

In an embodiment of the present application, after the charging voltage reaches the plateau voltage, the activity of the active material of the battery can be fully exerted. Therefore, setting the charge cut-off voltage to be greater than the voltage value corresponding to the plateau voltage can ensure that when the battery is charged, the maximum charging voltage of the battery can be at the voltage value corresponding to the plateau voltage, that is, ensure that the activity of the active material of the battery to be charged can be fully exerted, thereby enhancing the endurance of the battery to be charged.

In some embodiments, the above charge cut-off voltage can be determined by adding or multiplying a voltage value corresponding to the plateau voltage and a preset voltage value, as long as the resulting charge cut-off voltage being greater than the plateau voltage is ensured.

In some embodiments, when the charge cut-off voltage is determined by adding the voltage value corresponding to the plateau voltage and the preset voltage value, the preset voltage value is set to greater than 0. That is, the step of determining the charge cut-off voltage of the above battery to be charged according to the above plateau voltage and the preset voltage value includes: calculating a sum of the above plateau voltage and the preset voltage value and using the calculated sum as the charge cut-off voltage of the above battery to be charged.

For example, it is assumed that temperature T is room temperature 25°C, the voltage value corresponding to the determined plateau voltage is $V_{room}$ temperature, and the preset voltage value is $V_0$, the determined charge cut-off voltage $V = V_{room}$ temperature $+ V_0$.

When temperature T < room temperature, the determined plateau voltage is $V_{low}$ temperature and the preset voltage value is $V_0'$, the determined charge cut-off voltage is $V = V_{low}$ temperature $+ V_0'$.

When temperature T > room temperature, the determined plateau voltage is $V_{high}$ temperature and the preset voltage value is $V_0''$, the determined charge cut-off voltage is $V = V_{high}$ temperature $+ V_0''$.

The above $V_0$, $V_0'$ and $V_0''$ can be either equal values or unequal values. This is not limited herein.

In an embodiment of the present application, since the sum of the plateau voltage and the preset voltage value greater than 0 is used as the charge cut-off voltage, it can be ensured that the voltage of the battery to be charged is greater than the plateau voltage, thereby ensuring that the activity of the active material of the battery to be charged can be fully exerted after the battery to be charged is charged.

In some embodiments, if the sum of the plateau voltage and the preset voltage value is used as the charge cut-off voltage, the preset voltage value is greater than or equal to 0.01 mV and less than or equal to 1000 mV.

For example, when the plateau voltage is added to 0.01 mV or 1000 mV, respectively, since either the 0.01 mV or 1000 mV is greater than 0, any of the resulting sums is greater than the plateau voltage. That is, when the preset voltage value is greater than or equal to 0.01 mV and less than or equal to 1000 mV, the resulting sums acquired after the plateau voltages are added to the preset voltage value can both be used as the charge cut-off voltage of the battery to be charged.

Given that after the voltage value is greater than the plateau voltage, the activity of the active material of the battery can be fully exerted, the increased voltage value (that is, the preset voltage value) is set to greater than or equal to 0.01 mV. In addition, given that the voltage value that the battery itself can reach is limited, the increased voltage value is set to less than or equal to 1000 mV, so as to ensure that the charge cut-off voltage determined in the above manner is more accurate.

Certainly, if a product of the plateau voltage and the preset voltage value is used as the charge cut-off voltage, the preset voltage value needs to be greater than 1 mv, so as to determine that the charge cut-off voltage is greater than the plateau voltage. Details are not described herein again.

In some embodiments, the preset voltage value falls within [50 mV, 200 mV].

In an embodiment of the present application, given that when the preset voltage value falls within [50 mV, 200 mV], the voltage value based on which the charge cut-off voltage is increased is not great, that is, the voltage value based on which the charging voltage can be increased is also not great. In addition, the gram capacity exerted by the active material usually continues to increase as the charging voltage increases, so when the charge cut-off voltage is determined by using the above method, excessively great damage can be avoided to the battery to be charged based on improving the energy density of the battery to be charged, thereby effectively enhancing the endurance of the battery to be charged and ensuring the service life of the battery to be charged.

In some embodiments, the above preset voltage value is determined according to a target mapping, and the above target mapping is a mapping between a gram capacity of an active material of the above battery to be charged and the voltage value after the voltage value exceeds the above plateau voltage.

Specifically, given that the gram capacity and activity of the active material can be fully exerted when the voltage of the battery is at the plateau voltage, and the preset voltage value is used for ensuring that the determined charge cut-off voltage is at least greater than the plateau voltage, the preset voltage value can be determined with reference to the mapping between the voltage value exceeding the plateau voltage and the gram capacity.

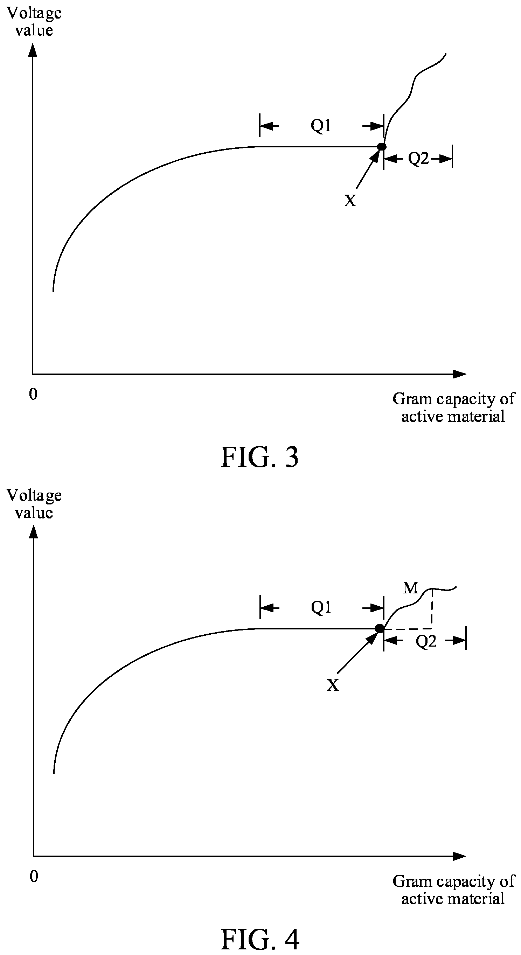

As shown in FIG. 3, it is assumed that a curve segment corresponding to Q1 is a curve segment corresponding to a voltage plateau and Q2 is a curve segment corresponding to a voltage value greater than the plateau voltage (that is, a voltage value corresponding to X in FIG. 3). There is a mapping between the gram capacity exerted by the active material of the battery to be charged and the voltage value, and a behavior thereof at Q1 is different from that at Q2. It can be seen from FIG. 3 that after the voltage value exceeds the plateau voltage, even if the voltage value continues to increase, an increased value of the gram capacity of the active material is very limited. However, the active material usually has a relatively major side reaction (for example, causing an increase in an oxide reaction at an electrode) at a relatively high voltage, that is, a service life of the battery is reduced at a high voltage. Therefore, the preset voltage value is determined according to the mapping between the gram capacity of the active material in Q2 and the voltage value, so that the accuracy of determining the preset voltage value can be improved.

In some embodiments, to ensure that the activity of the active material is fully exerted while damage to the battery is reduced, the preset voltage value can be set to a relatively small value when a trend in Q2 is relatively steep (that is, the slope of the curve is relatively great), and the preset voltage value can be set to a relatively great value when the trend in Q2 is relatively flat (that is, the slope of the curve is relatively small). Specifically, N (N is greater than or equal to 2) points can be selected in Q2, and the ratios of the voltage value exceeding the plateau voltage to the gram capacity of the active material exceeding the target gram capacity (the target gram capacity is the gram capacity of the active material corresponding to the plateau voltage) are respectively determined at the N points. If a ratio corresponding to a voltage value closest to the plateau voltage (i.e., a voltage value corresponding to a first point selected from left to right in Q2) is within a preset ratio range, the preset voltage value can be determined according to the voltage value closest to the plateau voltage, or a relationship between a ratio corresponding to a next point and the preset ratio range continues to be determined until a point not within the preset ratio range is determined. As shown in FIG. 4, it is assumed that the plateau voltage is $W0$, the gram capacity of the active material corresponding to the plateau voltage is S0, a first point selected from left to right in Q2 is M, a voltage value corresponding to M is $W1,$ and the gram capacity of the active material corresponding to M is S1, a relationship between $\frac{W1-W0}{S1-S0}$ and a preset ratio range is determined. If the $\frac{W1-W0}{S1-S0}$ is within the preset ratio range, *(W1-W0)* is used as the preset voltage value described in the embodiment of the present application.

In some embodiments, in the above target mapping, a target ratio is greater than or equal to 0.3 and less than or equal to 0.7. The target ratio is a ratio between a voltage value exceeding the plateau voltage and a gram capacity exceeding a target gram capacity. The above target gram capacity is a gram capacity of the active material corresponding to the above plateau voltage.

In an embodiment of the present application, given that when the ratio falls within [0.3, 0.7], the exertion of the gram capacity of the active material and the increase of the voltage value are still within an acceptable range, that is, as the voltage value increases, the energy density of the battery continuously increases, a point at which the ratio falls within [0.3, 0.7] can be selected in Q2, and a preset voltage value is determined according to a voltage value at the selected point, so as to ensure the service life of the battery while enhancing the battery endurance.

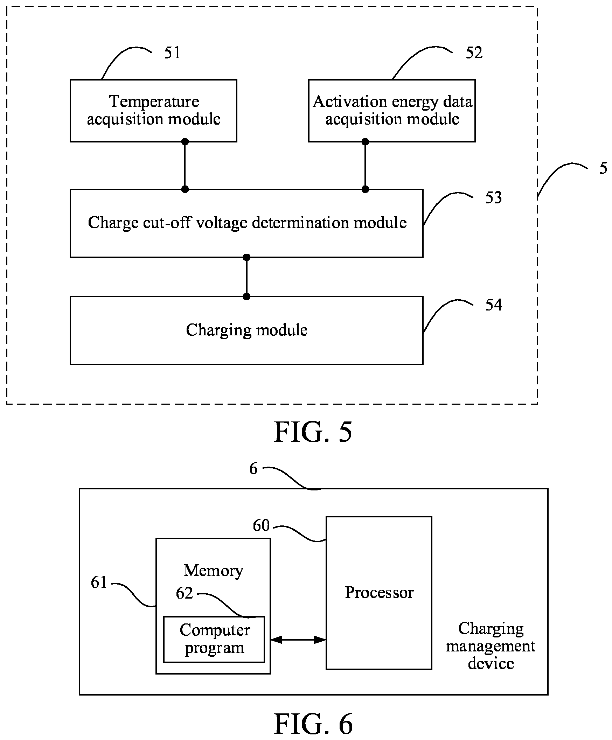

Corresponding to the charging method described in the foregoing embodiment, FIG. 5 shows a block diagram of a structure of a charging apparatus provided in an embodiment of the present application. For ease of description, only a part related to the embodiment of the present application is shown.

Referring to FIG. 5, the charging apparatus 5 includes:

a temperature acquisition module 51 for acquiring a temperature of a battery to be charged.

In some embodiments, when the number of the battery cells in the battery to be charged is equal to 1, the temperature of the battery to be charged can be set to a temperature of the battery cell. When the number of the battery cells in the battery to be charged is greater than 1, the temperature of the battery to be charged can be set as an average value of the temperatures of all the battery cells, so as to reflect an overall trend of the temperature of all the battery cells. Certainly, to reduce a cost of acquiring the temperature, the temperature of the battery to be charged can be set as an average value of the temperatures of some of the battery cells, or the temperature of the battery to be charged can be set as a temperature of a particular battery cell in the battery to be charged, that is, the temperature of the particular cell is used as the temperature of the battery to be charged.

The charging apparatus includes an activation energy data acquisition module 52 for acquiring activation energy data of the battery to be charged;

a charge cut-off voltage determination module 53 for determining a charge cut-off voltage according to the above temperature and the above activation energy data; and
a charging module 54 for charging the above battery to be charged and controlling a maximum charging voltage of the above battery to be charged to be less than or equal to the above charge cut-off voltage.

In an embodiment of the present application, since a temperature and activation energy data of a battery to be charged both affect whether an activity of an active material of the battery to be charged is fully exerted and whether the activity of the active material is fully exerted will affect the gram capacity of the active material, a more accurate charge cut-off voltage can be determined according to the temperature and activation energy data of the battery to be charged, so that after the battery to be charged is charged according to the charge cut-off voltage, the gram capacity of the active material of the charged battery is utilized to a greater extent, that is, the energy density of the charged battery is higher, thereby enhancing the battery endurance and improving the user experience.

In some embodiments, the above activation energy data acquisition module 52 includes:

a battery system determination unit for determining a battery system in which the above battery to be charged is located; and
an activation energy data determination unit for determining the activation energy data of the above battery to be charged according to the above battery system.

In some embodiments, the above charge cut-off voltage determination module 53 includes:

a plateau voltage determination unit for determining a plateau voltage according to the above temperature and the above activation energy data; and
a charge cut-off voltage determination unit for determining the charge cut-off voltage of the above battery to be charged according to the above plateau voltage.

In some embodiments, the above charge cut-off voltage determination unit is specifically used for determining the charge cut-off voltage of the above battery to be charged according to the above plateau voltage and a preset voltage value. The above charge cut-off voltage is greater than the above plateau voltage.

In an embodiment, the above step of determining the charge cut-off voltage of the above battery to be charged according to the above plateau voltage and the preset voltage value includes:

calculating a sum of the above plateau voltage and the preset voltage value and using the calculated sum as the charge cut-off voltage of the above battery to be charged.

In some embodiments, the above preset voltage value is greater than or equal to 0.01 mV and less than or equal to 1000 mV.

In some embodiments, the above preset voltage value is determined according to a target mapping, and the above target mapping is a mapping between a gram capacity of an active material of the above battery to be charged and the voltage value after the voltage value exceeds the above plateau voltage.

In some embodiments, in the above target mapping, a target ratio is greater than or equal to 0.3 and less than or equal to 0.7. The above target ratio is a ratio between the voltage value exceeding the above plateau voltage and a gram capacity exceeding a target gram capacity. The above target gram capacity is a gram capacity corresponding to the above plateau voltage.

It needs to be noted that the content such as information interaction between the above apparatuses/units and execution processes is based on the same concept as that in the method embodiments of the present application. For specific functions thereof and technical effects brought about thereby, reference can be made to the section of method embodiments, and details are not described herein again.

FIG. 6 is a schematic view of a structure of a charging management device provided in an embodiment of the present application. As shown in FIG. 6, the charging management device 6 of the embodiment includes: at least one processor 60 (only one processor is shown in FIG. 6), a memory 61, and a computer program 62 stored in the memory 61 and executable on the at least one processor 60. When executing the computer program 62, the processor 60 implements the steps in any of the above method embodiments.

The charging management device 6 can include, but is not limited to, a processor 60 and a memory 61. Those skilled in the art may understand that FIG. 6 only shows an example of the charging management device 6 and does not constitute a limitation to the charging management device 6. The charging management device can include more or less components than those shown in the figure, or combinations of some components, or different components. The charging management device can further include input and output devices, a network access device, etc.

The processor 60 can be a Central Processing Unit (CPU). The processor 60 can also be other general-purpose processors, a Digital Signal Processor (DSP), an Application Specific Integrated Circuit (ASIC), a Field-Programmable Gate Array (FPGA) or other programmable logic devices, discrete gate or transistor logic devices, or discrete hardware assemblies, etc. The general-purpose processor can be a microprocessor, or the processor may alternatively be any conventional processor, etc.

In some embodiments, the memory 61 can be an internal storage unit of the charging management device 6, for example, a hard disk or a RAM of the charging management device 6. In some other embodiments, the memory 61 may alternatively be an external storage device of the charging management device 6, for example, a plug-in hard disk, a Smart Media Card (SMC), a Secure Digital (SD) card, or a Flash Card, etc., which are provided on the charging management device 6. Furthermore, the memory 61 may alternatively include both an internal storage unit and an external storage device of the charging management device 6. The memory 61 is used for storing an operating system, an application program, a BootLoader, data, and other programs, for example, program code of the computer program. The memory 61 may alternatively be used for temporarily storing data that has been output or is to be output.

Those skilled in the pertinent field can clearly appreciate that for clarity and brevity of description, the illustration is made in an exemplary manner by means of the division of the above various functional units and modules. In practical application, the functions described above may be allocated to different functional units or modules as needed, that is, the internal structure of the apparatus is divided into different function units or modules, so as to complete all or some of the functions described above. In addition, various functional units or modules in the embodiments can be all integrated into one processing unit, or each unit may alternatively exist as a separate unit, or two or more units may alternatively be integrated in one unit. The above integrated unit may be implemented either in the form of a hardware or in the form of a software functional unit. In addition, the specific names of the functional units and modules are also only for the convenience of distinguishing from each other, but are not intended to limit the scope of protection of the present application. For the specific operational processes of the units and modules in the above system, reference can be made to the corresponding processes in the preceding method embodiments, and details are not described herein again.

An embodiment of the present application further provides a network device. The network device includes: at least one processor, a memory, and a computer program stored in the memory and executable on the at least one processor. When executing the computer program, the processor implements the steps in any of the above method embodiments.

An embodiment of the present application further provides a computer-readable storage medium. A computer program is stored in the computer-readable storage medium. The computer program, when executed by a processor, can implement the steps in each of the above method embodiments.

An embodiment of the present application provides a computer program product. When the computer program product runs on the charging management device, the charging management device can execute the steps in the various method embodiments above during execution.

When the integrated unit is implemented in the form of a software functional unit and sold or used as an independent product, the integrated unit may be stored in a computer-readable storage medium. Based on such an understanding, the present application implements all or some of procedures of the methods of the above embodiments, which can be accomplished by a computer program instructing a relevant hardware. The computer program can be stored in a computer-readable storage medium, and when executed by a processor, can implement the steps of the various method embodiments. The computer program includes computer program code. The computer program code may be in a source code form, an object code form, as an executable file, in some intermediate forms, etc. The computer-readable medium at least may include: any entity or apparatus, record medium, computer memory, Read-Only Memory (ROM), Random Access Memory (RAM), power line carrier signal, telecommunication signal, and software distribution medium that can carry computer program code to a photographing apparatus/charging management device. Examples are a USB flash drive, a removable hard disk, a magnetic disk, an optical disc, etc. In some jurisdictions, according to legislation and patent practices, the computer-readable medium may not be a power line carrier signal and a telecommunication signal.

In the above embodiments, the description of each of the embodiments has its own emphasis. For a part that is not described in detail in an embodiment, reference can be made to related descriptions in other embodiments.

Those of ordinary skill in the art may be aware that units and algorithm steps of each example described with reference to the embodiments disclosed herein can be implemented by electronic hardware, or a combination of computer software and electronic hardware. Whether the functions are executed in the form of hardware or software depends on particular applications and design constraint conditions of the technical solution. A person skilled in the art can use different methods to implement the described functions for each particular application, but it should not be considered that the implementation goes beyond the scope of the present application.

In the embodiments provided in the present application, it should be understood that the disclosed apparatuses/network devices and methods can be implemented in other manners. For example, the above-described apparatus/network device embodiments are merely examples. For example, the division of the modules or units is merely a logical function division, and during actual implementation, other division methods may be used. For example, a plurality of units or assemblies can be combined or integrated into another system, or some features may be ignored or not performed. In addition, the displayed or discussed mutual couplings or direct couplings or communication connections may be implemented by using some interfaces. The indirect couplings or communication connections between apparatuses or units may be implemented electrically, mechanically, or in other forms.

The units described as separate components may or may not be physically separated, and the components displayed as units may or may not be physical units, that is, may be located in one place or may alternatively be distributed on a plurality of network units. Some or all of the units may be selected according to actual needs to achieve the objectives of the solutions of the embodiments.

The above embodiments are merely intended for describing, rather than limiting, the technical solutions of the present application. Although the present application is described in detail with reference to the foregoing embodiments, those of ordinary skill in the art should understand that they may still make modifications to the technical solutions described in the foregoing embodiments or make equivalent replacements to some technical features thereof, and these modifications or replacements do not depart the substance of the respective technical solutions from the spirit and scope of the technical solutions of the embodiments of the present application and should all be encompassed in the scope of protection of the present application.

**Claims**

1. A charging method, comprising:

   acquiring a temperature of a battery to be charged;
   acquiring activation energy data of the battery to be charged;
   determining a charge cut-off voltage according to the temperature and the activation energy data; and
   charging the battery to be charged and controlling a maximum charging voltage of the battery to be charged to be less than or equal to the charge cut-off voltage.

2. The charging method according to claim 1, wherein the step of acquiring the activation energy data of the battery to be charged comprises:

   determining a battery system in which the battery to be charged is located; and
   determining the activation energy data of the battery to be charged according to the battery system.

3. The charging method according to claim 1 or 2, wherein the step of determining the charge cut-off voltage according to the temperature and the activation energy data comprises:

   determining a plateau voltage according to the temperature and the activation energy data; and
   determining the charge cut-off voltage of the battery to be charged according to the plateau voltage.

4. The charging method according to claim 3, wherein the step of determining the charge cut-off voltage of the battery to be charged according to the plateau voltage comprises:
   determining the charge cut-off voltage of the battery to be charged according to the plateau voltage and a preset voltage value, wherein the charge cut-off voltage is greater than the plateau voltage.

5. The charging method according to claim 4, wherein the step of determining the charge cut-off voltage of the battery to be charged according to the plateau voltage and the preset voltage value comprises:
   calculating a sum of the plateau voltage and the preset voltage value and using the calculated sum as the charge cut-off voltage of the battery to be charged.

6. The charging method according to claim 5, wherein the preset voltage value is greater than or equal to 0.01 mV and less than or equal to 1000 mV.

7. The charging method according to claim 5, wherein the preset voltage value is determined according to a target mapping, and the target mapping is a mapping between a gram capacity of an active material of the battery to be charged and a voltage value after the voltage value exceeds the plateau voltage.

8. The charging method according to claim 7, wherein in the target mapping, a target ratio is greater than or equal to 0.3 and less than or equal to 0.7, wherein the target ratio is a ratio between a voltage value exceeding the plateau voltage and a gram capacity exceeding a target gram capacity, and the target gram capacity is a gram capacity corresponding to the plateau voltage.

9. A charging apparatus, comprising:

   a temperature acquisition module for acquiring a temperature of a battery to be charged;
   an activation energy data acquisition module for acquiring activation energy data of the battery to be charged;
   a charge cut-off voltage determination module for determining a charge cut-off voltage according to the temperature and the activation energy data; and
   a charging module for charging the battery to be charged and controlling a maximum charging voltage of the battery to be charged to be less than or equal to the charge cut-off voltage.

10. A charging management device, comprising a memory, a processor, and a computer program stored in the memory and executable on the processor, wherein when executing the computer program, the processor implements the method according to any one of claims 1 to 8.

11. A computer-readable storage medium, wherein a computer program is stored in the computer-readable storage medium, and the computer program, when executed by a processor, implements the method according to any one of claims 1 to 8.

```
   ┌─ S11                          ┌─ S12
┌─────────────────────┐      ┌─────────────────────┐
│ Acquire a temperature of a │   │ Acquire activation energy data │
│ battery to be charged │      │ of the battery to be charged │
└─────────────────────┘      └─────────────────────┘
           │                            │
           ▼                            ▼
┌──────────────────────────────────────────────────┐
│ Determine a charge cut-off voltage of the above battery to be charged │ ─ S13
│ according to the above temperature and the above activation energy │
│ data │
└──────────────────────────────────────────────────┘
                         │
                         ▼
┌──────────────────────────────────────────────────┐
│ Charge the battery to be charged and control a maximum charging │ ─ S14
│ voltage of the battery to be charged to be less than or equal to the │
│ above charge cut-off voltage │
└──────────────────────────────────────────────────┘
```

## FIG. 1

FIG. 2

FIG. 3

FIG. 4

```
┌ ─ ─ ─ ─ ─ ─ ─ ─ ─ ─ ─ ─ ─ ─ ─ ─ ─ ─ ─ ─ ─ ─ ─ ─ ┐
│                                                   │
│        51                          52             │
│   ┌──────────────┐          ┌──────────────────┐  │
│   │ Temperature  │          │ Activation energy│  │
│   │ acquisition  │          │ data acquisition │  │        5
│   │   module     │          │     module       │  │
│   └──────┬───────┘          └────────┬─────────┘  │
│          │                           │            │
│   ┌──────┴───────────────────────────┴─────┐  53  │
│   │                                         │      │
│   │  Charge cut-off voltage determination   │      │
│   │               module                    │      │
│   └────────────────────┬────────────────────┘      │
│                        │                    54     │
│   ┌────────────────────┴────────────────────┐      │
│   │                                         │      │
│   │            Charging module              │      │
│   │                                         │      │
│   └─────────────────────────────────────────┘      │
│                                                   │
└ ─ ─ ─ ─ ─ ─ ─ ─ ─ ─ ─ ─ ─ ─ ─ ─ ─ ─ ─ ─ ─ ─ ─ ─ ┘
```

FIG. 5

```
                    6
┌──────────────────────────────────────────────────┐
│                        60                         │
│     ┌──────────────┐    ┌──────────────┐          │
│     │   Memory     │    │              │          │
│  61 │  62          │    │              │          │
│     │  ┌────────┐  │    │  Processor   │  Charging │
│     │  │Computer│  │◄──►│              │ management │
│     │  │program │  │    │              │   device  │
│     │  └────────┘  │    │              │          │
│     └──────────────┘    └──────────────┘          │
└──────────────────────────────────────────────────┘
```

FIG. 6

## INTERNATIONAL SEARCH REPORT

| | International application No. |
|---|---|
| | **PCT/CN2024/111541** |

**A. CLASSIFICATION OF SUBJECT MATTER**

H02J7/00(2006.01)i

According to International Patent Classification (IPC) or to both national classification and IPC

**B. FIELDS SEARCHED**

Minimum documentation searched (classification system followed by classification symbols)

IPC: H02J

Documentation searched other than minimum documentation to the extent that such documents are included in the fields searched

Electronic data base consulted during the international search (name of data base and, where practicable, search terms used)

CNTXT, CNABS, ENTXT, ENTXTC, CNKI, IEEE, CJFD: 充电, 电池, 温度, 活化能, 截止电压, 终止电压, 活性, 克容量, 能量密度, 阿伦尼乌斯, battery, charg+, temperature, arrheniuse, activation energy, cut-off voltage, activity

**C. DOCUMENTS CONSIDERED TO BE RELEVANT**

| Category* | Citation of document, with indication, where appropriate, of the relevant passages | Relevant to claim No. |
|---|---|---|
| Y | CN 105207281 A (ZTE CORP.) 30 December 2015 (2015-12-30) description, paragraphs 43-56, and figures 1-4 | 1, 2, 9-11 |
| Y | CN 111044905 A (STATE GRID BEIJING ELECTRIC POWER COMPANY et al.) 21 April 2020 (2020-04-21) description, paragraphs [0044]-[0058] | 1, 2, 9-11 |
| A | CN 111384757 A (GUANGDONG OPPO MOBILE COMMUNICATIONS CO., LTD.) 07 July 2020 (2020-07-07) entire document | 1-11 |
| A | CN 112706656 A (BYD CO., LTD.) 27 April 2021 (2021-04-27) entire document | 1-11 |
| A | US 2015022160 A1 (APPLE INC.) 22 January 2015 (2015-01-22) entire document | 1-11 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **16 November 2024** | **22 November 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/111541**

| Patent document cited in search report | | | Publication date (day/month/year) | Patent family member(s) | | | Publication date (day/month/year) |
|---|---|---|---|---|---|---|---|
| CN | 105207281 | A | 30 December 2015 | WO | 2015196535 | A1 | 30 December 2015 |
| CN | 111044905 | A | 21 April 2020 | | None | | |
| CN | 111384757 | A | 07 July 2020 | WO | 2021203857 | A1 | 14 October 2021 |
| | | | | CN | 111384757 | B | 14 June 2022 |
| CN | 112706656 | A | 27 April 2021 | CN | 112706656 | B | 07 December 2021 |
| US | 2015022160 | A1 | 22 January 2015 | US | 9559543 | B2 | 31 January 2017 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311411511